(19) Europäisches Patentamt
European Patent Office
Office européen des brevets

(11) **EP 4 395 165 A1**

(12) **EUROPEAN PATENT APPLICATION**
published in accordance with Art. 153(4) EPC

(43) Date of publication:
**03.07.2024 Bulletin 2024/27**

(21) Application number: **22871991.0**

(22) Date of filing: **21.09.2022**

(51) International Patent Classification (IPC):
*H02S 40/34* (2014.01)    *H02S 20/00* (2014.01)
*B60J 7/00* (2006.01)

(52) Cooperative Patent Classification (CPC):
Y02E 10/50

(86) International application number:
**PCT/CN2022/120103**

(87) International publication number:
**WO 2023/045945 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.09.2021 CN 202111106746**

(71) Applicant: **Fuyao Glass Industry Group Co., Ltd.**
**Fuzhou, Fujian 350300 (CN)**

(72) Inventors:
• **ZHANG, Jianming**
**Fuzhou, Fujian 350300 (CN)**

• **GUAN, Jinliang**
**Fuzhou, Fujian 350300 (CN)**
• **CHEN, Min**
**Fuzhou, Fujian 350300 (CN)**
• **GUO, Yong**
**Fuzhou, Fujian 350300 (CN)**
• **LIU, Chunxin**
**Fuzhou, Fujian 350300 (CN)**

(74) Representative: **Tarabbia, Luigi**
**Bugnion S.p.A**
**Viale Lancetti, 17**
**20158 Milano (IT)**

(54) **UNIDIRECTIONAL CONDUCTIVE JOINT ASSEMBLY AND PHOTOVOLTAIC SUNROOF MECHANISM**

(57)    The present application relates to a unidirectional conductive joint assembly (10) and a photovoltaic sunroof mechanism (20). The unidirectional conductive joint assembly comprises a unidirectional conductive device (11), wherein a conductive sheet (12) is electrically connected to a conductive end (111) of the unidirectional conductive device (11), another conductive sheet (12) is electrically connected to another conductive end (111) of the unidirectional conductive device (11), insulating films (13) are laminated on two sides of each conductive sheet (12), and each conductive sheet (12) is sandwiched between two insulating films (13); and the two conductive ends (111) of the unidirectional conductive device (11) are insulated and sealed in an insulating package (14), portions of the conductive sheets (12) on the sides of the insulating films (13) close to the unidirectional conductive device (11) are first conductive portions (121), the first conductive portions (121) and film sides of the insulating films (13) close to the first conductive portions (121) are all insulated and sealed in the insulating package (14), and the conductive sheets (12) and the insulating films (13) are all partially located outside the insulating package (14).

FIG. 1

## Description

## CROSS-REFERENCE TO RELATED APPLICATIONS

The present application claims priority to Chinese patent application No. 2021111067467, entitled "UNIDIRECTIONAL CONDUCTIVE JOINT ASSEMBLY AND PHOTOVOLTAIC SUNROOF MECHANISM", filed on September 22, 2021, the disclosure of which is hereby incorporated by reference in its entirety.

## TECHNICAL FIELD

The present application relates to the technical field of solar modules, and in particular, to a unidirectional conductive joint assembly and photovoltaic sunroof mechanism.

## BACKGROUND

In the auto parts field, solar energy received by the roof of the automobile may be converted into electric energy by designing the automobile sunroof as a photovoltaic sunroof (or solar sunroof), so as to supply power to the electrical devices in the automobile. A bypass diode may be disposed on the photovoltaic sunroof to avoid hot spots and ensure that each cell sheet works properly. When there are multiple cell groups to be connected in series, multiple bypass diodes may be provided correspondingly; Each bypass diode is connected in series between a pair of cell groups. Each bypass diode can be enclosed in a junction box, which provide certain electrical insulation protection. However, terminals in the junction box needs to be electrically connected with the cell or a plug, and there are still great electrical safety hazards during use.

## SUMMARY

According to various embodiments of the present application, a unidirectional conductive joint assembly and a photovoltaic sunroof mechanism are provided to improve electrical safety during use.

The unidirectional conductive joint assembly includes:

a unidirectional conductive device, one conductive end of the unidirectional conductive device being electrically connected with a conductive sheet, another conductive end of the unidirectional conductive device being electrically connected with another conductive sheet, insulating films being laminated on two sides of each of the conductive sheets, and each of the conductive sheets being sandwiched between two insulating films; and

an insulating package body, two conductive ends of the unidirectional conductive device being sealed in the insulating package body in an insulating manner, a portion of each of the conductive sheets located on a side of the insulating films adjacent to the unidirectional conductive device being a first conductive part, the first conductive part and film edges of the insulating films adjacent to the first conductive part being sealed in the insulating package body in an insulating manner, and wherein the conductive sheet and the insulating films are partially located outside the insulating package body.

In an embodiment, a clamping assembly is disposed on the insulating package body. The clamping assembly includes two clamping bosses arranged opposite to each other. The two clamping bosses included in the clamping assembly respectively clamp the two sides of the conductive sheet. One of the insulating films is located between the conductive sheet and one of the clamping bosses, and another one of the insulating films is located between the conductive sheet and another one of the clamping bosses.

In an embodiment, an end surface of each of the clamping bosses away from the insulating package body is a curved surface in a direction in which the insulating films extend out of the insulating package body.

In an embodiment, the clamping bosses are semicircular clamping flaps. An edge with a diameter of each of the clamping flaps is connected to the insulating package body. The curved surface and the edge with the diameter enclose a semicircular shape.

In an embodiment, a thickness of each of the clamping bosses gradually decreases in a direction in which the insulating films extend out of the insulating package body.

In an embodiment, a bottom surface or a top surface of the insulating package body is configured to be attached to a photovoltaic glass. A surface of the insulating package body between the top surface and the bottom surface is a side surface. The insulating films and the conductive sheet extend out of the insulating package body through the side surface of the insulating package body.

In an embodiment, the unidirectional conductive joint assembly further includes a first conducting wire and a second conducting wire. An end of the first conducting wire is electrically connected with the one conductive end of the unidirectional conductive device, another end of the first conducting wire is provided with a first plug. An end of the second conducting wire is electrically connected with the other conductive end of the unidirectional conductive device, another end of the second conducting wire is provided with a second plug. A sealing boss is disposed on a portion of the insulating package body through which the first conducting wire and/or the second conducting wire extends. The sealing boss seals an outer periphery of the first conducting wire and/or the second conducting wire.

In an embodiment, a plurality of the unidirectional conductive devices are provided. The plurality of the unidirectional conductive devices are connected in series. A unidirectional conductive device at a head end of the plurality of the unidirectional conductive devices is electrically connected with the first conducting wire. A unidirectional conductive device at a tail end of the plurality of the unidirectional conductive devices is electrically connected with the second conducting wire.

In an embodiment, the unidirectional conductive device is located entirely within the insulating package body. A heat dissipation filler is arranged in the insulating package body. The heat dissipation filler is distributed between the unidirectional conductive device and the insulating package body. The insulating package body is integrally molded outside the unidirectional conductive device and the heat dissipation filler.

In an embodiment, a portion of the unidirectional conductive device between the two conductive ends of the unidirectional conductive device is a unidirectional conductive body. The unidirectional conductive body is at least partially exposed outside the insulating package body.

In an embodiment, the conductive sheet is a copper sheet. A thickness of the conductive sheet is in a range from about 0.05 mm to about 0.2 mm.

In an embodiment, the conductive sheet is connected to respective one of the conductive ends of the unidirectional conductive device by soldering.

In an embodiment, the insulating films are PI films. A thickness of each of the insulating films is in a range from about 0.02 mm to about 0.1 mm.

In an embodiment, the insulating package body is made of a high-temperature silicone.

The photovoltaic sunroof mechanism includes a photovoltaic glass and the above unidirectional conductive joint assembly. A portion of the conductive sheet extending out of the insulating package body is electrically connected with a busbar of the photovoltaic glass.

## BRIEF DESCRIPTION OF THE DRAWINGS

In order to illustrate the technical solutions more clearly in the embodiments of the present application, a brief description is given below for the drawings referred in the description of the embodiments. Obviously, the drawings in the following description illustrates merely some embodiments of this application. For those of ordinary skill in the art, other drawings can also be obtained based on these drawings without involving any inventive effort.

FIG. 1 is a schematic structural diagram of a unidirectional conductive joint assembly according to an embodiment.
FIG. 2 is a partial enlarged view of a portion A in FIG. 1.
FIG. 3 is a schematic structural diagram of a unidirectional conductive joint assembly according to another embodiment.

FIG. 4 is a schematic structural diagram of the unidirectional conductive joint assembly shown in FIG. 1 and FIG. 3 with an insulating package body removed.
FIG. 5 is a top view of the unidirectional conductive joint assembly in FIG. 4.
FIG. 6 is a schematic structural diagram of a photovoltaic sunroof mechanism according to an embodiment.
FIG. 7 is a sectional view taken along a line B-B in FIG. 6.
FIG. 8 is a partial enlarged view of a portion C in FIG. 7.

Illustration For Reference Numerals:

10. unidirectional conductive joint assembly; 11. unidirectional conductive device; 111. conductive end; 112. unidirectional conductive body; 12. conductive sheet; 121. first conductive part; 13. insulating film; 14. insulating package body; 141. clamping assembly; 1411. clamping boss; 1412. curved surface; 142. top surface; 143. side surface; 144. sealing boss; 15. first conducting wire; 151. first plug; 16. second conducting wire; 161. second plug; 20. photovoltaic sunroof mechanism; 21. photovoltaic glass; 211. inner glass; and 212. outer glass.

## DETAILED DESCRIPTION

In order to make the objects, features, and advantages of the present application more apparent and understandable, the specific implementations of the present application will be illustrated in detail below in conjunction with the accompanying drawings. In the following description, numerous specific details are set forth in order to facilitate a thorough understanding of the present application. However, the present application can be implemented in many other ways different from those described herein, and those skilled in the art can make similar modifications without departing from the connotation of the present application, so that the present application is not limited to the specific embodiments disclosed below.

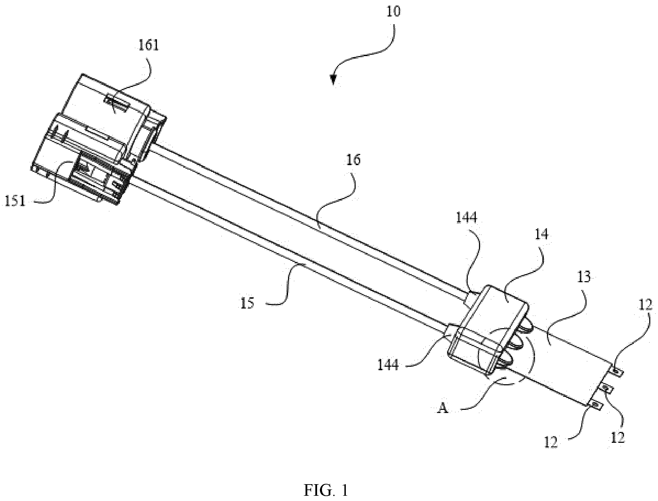

As shown in FIGS. 1 to 5, in an embodiment, a unidirectional conductive joint assembly 10 is provided, which includes:

a unidirectional conductive device 11, where a conductive end 111 of the unidirectional conductive device 11 is electrically connected with a conductive sheet 12, and another conductive end 111 of the unidirectional conductive device 11 is electrically connected with another conductive sheet 12; insulating films 13 are laminated on two sides of each of the conductive sheets 12 respectively; each of the conductive sheets 12 is sandwiched between two insulating films 13; and
an insulating package body 14, where the two conductive ends 111 of the unidirectional conductive device 11 are sealed in the insulating package body 14 in an insulating manner; a portion of the conductive sheet 12 located on sides of the insulating films 13 adjacent to the unidirectional conductive device 11 is a first conductive part 121; the first conductive part 121 and film edge of the insulating films 13 adjacent to the first conductive part 121 are sealed in the insulating package body 14 in an insulating manner; the conductive sheet 12 and the insulating films 13 are all partially located outside the insulating package body 14.

According to the unidirectional conductive joint assembly 10 provided in the above embodiment, the insulating package body 14 is used such that the two conductive ends 111 of the unidirectional conductive device 11, the first conductive part 121 and the film edges of the insulating films 13 adjacent to the first conductive part 121 are all packaged in the insulating package body 14, thereby improving the electrical safety of the unidirectional conductive joint assembly 10. In use, only an end of the conductive sheet 12 away from the unidirectional conductive device 11 is exposed, and is used for electrically connecting with an electrical device, such as a cell. Other portions of the conductive sheet 12 are sealed in the insulating films 13 or the insulating package body 14, thereby effectively avoiding electrical problems.

The insulating films 13 are laminated outside the conductive sheet 12 to effectively prevent the conductive sheet 12 from being electrically connected with other components in the wiring process. When the unidirectional conductive joint assembly 10 is in use, the end of the conductive sheet 12 away from the unidirectional conductive device 11 can be directly arranged at a position where the electrical device, such as the cell, are located, and there is no need to provide additional conducting wires, and the assembling process is simple and quick.

In an embodiment, the unidirectional conductive device 11 can be a diode. Two conductive ends 111 of the diode are each electrically connected to a conductive sheet 12. The two conductive ends 111 of the diode are sealed in the insulating package body 14 in an insulating manner.

Further, the diode is a high-temperature resistant diode or a high-temperature resistant bypass diode. The high-temperature resistant bypass diode is preferred, and its Tc(max) can reach 150 °C. The forward working current If of the diode is 15 A. The maximum reverse working voltage Vdrm is 50 V

$$Tc(max) = Tj - P \times Rjc,$$

where Tc(max): a maximum allowable temperature of a chip package surface;
Tj: a junction temperature, which is a maximum allowable temperature of a chip core;
P: an actual power consumption of a chip; and
Rjc: a thermal resistance of a core-package surface of the chip.

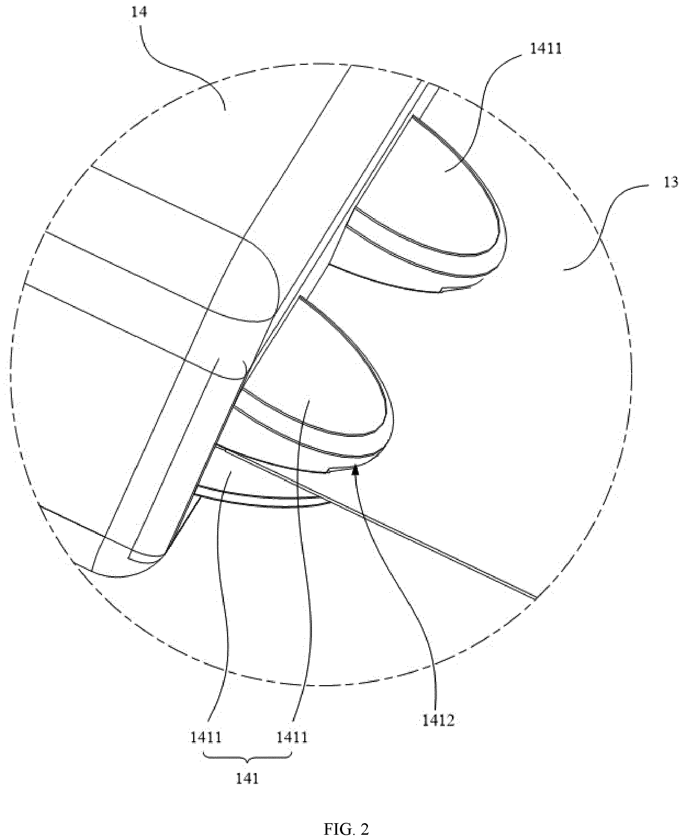

Further, in an embodiment, as shown in FIGS. 1 and 2, a clamping assembly 141 is disposed on the insulating package body 14. The clamping assembly 141 includes two clamping bosses 1411 arranged opposite to each other. The two clamping bosses 1411 included in the one clamping assembly 141 respectively clamp the two sides of the conductive sheet 12 respectively, with one of the insulating films 13 being located between this conductive sheet 12 and one of the clamping bosses 1411, and another one of the insulating films 13 being located between this conductive sheet 12 and another one of the clamping bosses 1411.

In other words, one of the clamping bosses 1411 clamps a side of one of the insulating films 13 facing away from the conductive sheet 12, and the other of the clamping bosses 1411 clamps a side of the other of the insulating films 13 facing away from the conductive sheet 12. In this way, on the one hand, the mounting stability of the insulating films 13 in the insulating package body 14 can be improved, and on the other hand, the insulating film 13 or the conductive sheet 12 can be prevented from being damaged during bending.

Further, as shown in FIG. 2, in an embodiment, an end surface of each of the clamping bosses 1411 away from the insulating package body 14 is a curved surface 1412 in a direction in which the insulating films 13 extend out of the insulating package body 14. On the one hand, the directions in which the insulating film 13 and the conductive sheet 12 can be bent are diversified, and on the other hand, a portion at which the clamping boss 1411 is in contact with the insulating film 13 is in a relatively round form rather than in a form of a sharp right angle, when bending the insulating film 13 and the conductive sheet 12.

In an embodiment, as shown in FIG. 2, the clamping boss 1411 is a semicircular clamping flap. An edge with a diameter of the clamping flap is connected to the insulating package body 14. The curved surface 1412 and the edge with a diameter enclose a semicircular shape. A projection shape of the semicircular clamping flap on a projection plane parallel to the insulating film 13 is a semicircular picture. The edge with a diameter of the clamping flap is projected on such projection plane as a straight edge of the semicircular picture in the projection. The curved surface of the clamping flap is projected on such projection plane as a semicircular curved line of the semicircular picture in the projection.

The clamping flaps may be disposed on the upper side and the lower side of each of the conductive sheets 12 respectively. A pair of clamping flaps clamp the two insulating films 13 and the conductive sheet 12.

Further, in an embodiment, as shown in FIG. 2, a thickness of the clamping boss 1411 gradually decreases in the direction in which the insulating film 13 extends out of the insulating package body 14.

Further, in an embodiment, as shown in FIGS. 1 to 5 and FIG. 8, a bottom surface (not shown in the figure) or a top surface 142 of the insulating package body 14 is used for being attached to a photovoltaic glass 21. A surface of the insulating package body 14 between the top surface 142 and the bottom surface is a side surface 143. The insulating films 13 and the conductive sheet 12 extend out of the insulating package body 14 through the side surface 143 of the insulating package body 14.

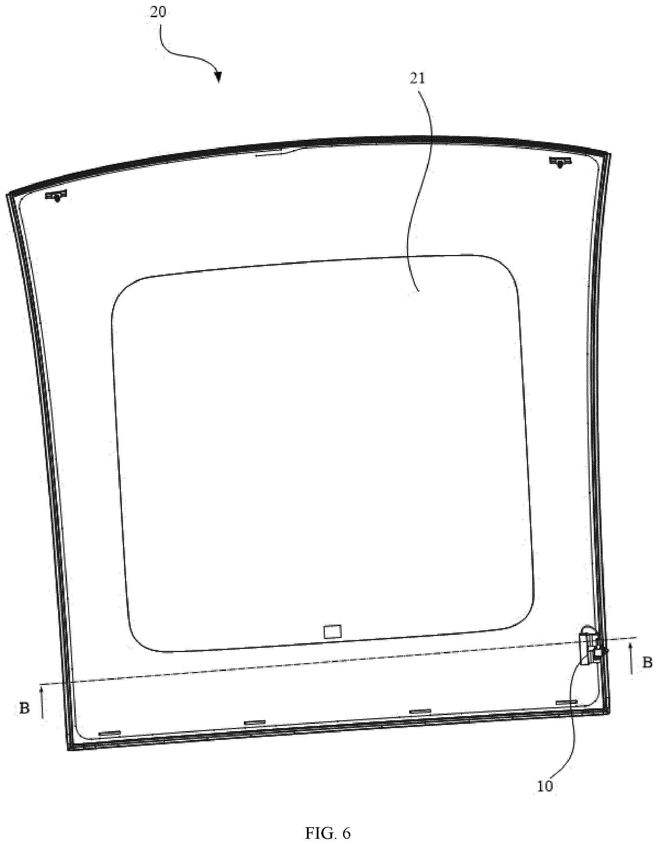

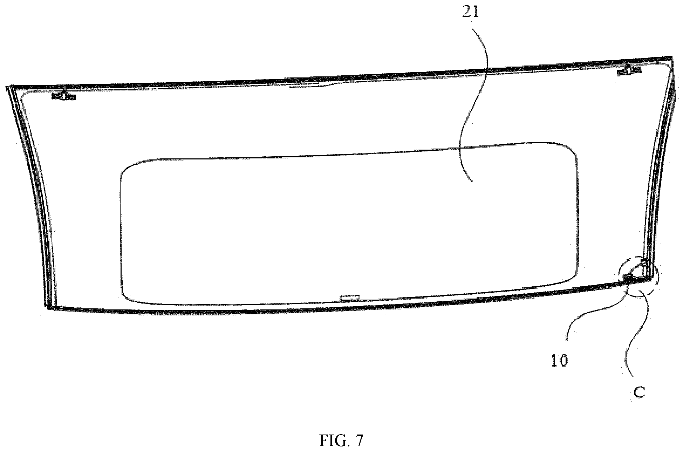

As shown in FIGS. 6 to 8, when the unidirectional conductive joint assembly 10 is mounted on the photovoltaic glass 21, the bottom surface or the top surface 142 of the insulating package body 14 is adhered to the photovoltaic glass 21, then the insulating films 13 and the conductive sheet 12 are wired along the surface of the photovoltaic glass 21, and finally the conductive sheet 12 is electrically connected to a busbar of the photovoltaic glass 21. Since the insulating film 13 and the conductive sheet 12 extend out of the side surface 143 of the insulating package body 14, the surface of the insulating package body 14 used for adhering to the photovoltaic glass 21 has no other protrusions or extension parts, and the adhesion reliability is high. Moreover, there is no need to reserve a gap between the insulating package body 14 and the photovoltaic glass 21 for the conductive sheet 12 to extend through, thereby effectively reducing the space occupied by the mounting. In other words, with respect to the solution in which the conductive sheet 12 and the insulating film 13 extend out of the surface of the insulating package body 14 used for being adhered to the photovoltaic glass 21, the configuration in which the conductive sheet 12 and the insulating film 13 extend out of the side surface 143 of the insulating package body 14 is adopted such that on the one hand e the reliability of the connection between the insulating package body 14 and the photovoltaic glass 21can be improved, and on the other hand the space occupancy during assembly can be reduced.

Further, in an embodiment, as shown in FIGS. 1 to 5, the unidirectional conductive joint assembly 10 further includes a first conducting wire 15 and a second conducting wire 16. An end of the first conducting wire 15 is electrically connected with a conductive end 111 of the unidirectional conductive device 11, and another end of the first conducting wire 15 is provided with a first plug 151. An end of the second conducting wire 16 is electrically connected with another conductive end 111 of the unidirectional conductive device 11, and another end of the second conducting wire 16 is provided with a second plug 161. The first plug 151 and the second plug 161 are used to be electrically connected to a load requiring power supply.

Further, as shown in FIGS. 1 to 5, the first conducting wire 15 and the second conducting wire 16 also extend out of the side surface 143 of the insulating package body 14. The side surface of the insulating package body 14, of which the first conducting wire 15 and the second conducting wire 16 extend out, is opposite to the side surface of the insulating package body 14, of which the conductive sheet 12 extends out.

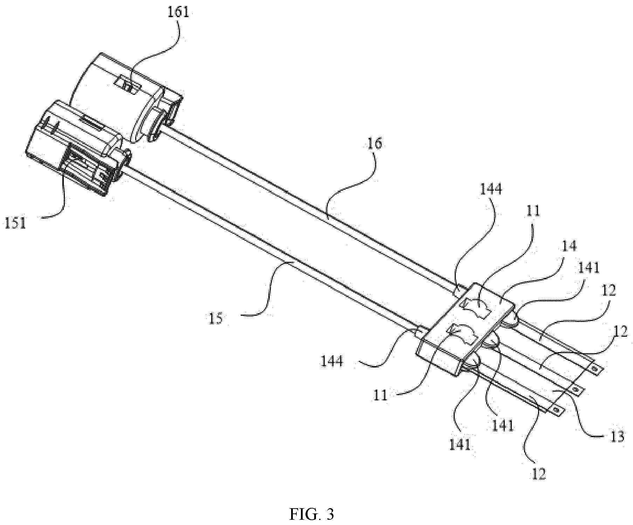

Further, as shown in FIGS. 1 and 3, in an embodiment, a sealing boss 144 is disposed on a portion of the insulating package body 14 through which the first conducting wire 15 and/or the second conducting wire 16 extends. The sealing boss 144 seals the outer periphery of the first conducting wire 15 and/or the second conducting wire 16. By sealing the portion of the insulating package body 14 of which the first conducting wire 15 and/or the second conducting wire 16 extends out, the electrical safety is further improved. Siphoning and water seepage at the portions of which the first conducting wire 15 and the second conducting wire 16 extend out are avoided, and it is also convenient for positioning the insulating package body 14 when being formed.

In an embodiment, as shown in FIG. 1, the sealing boss 144 is disposed on the side surface 143 of the insulating package body 14. The first conducting wire 15 and/or the second conducting wire 16 extends out of this side surface 143 of the insulating package body 14.

For the entire unidirectional conductive joint assembly 10, except for that the first plug 151, the second plug 161, and an end of the conductive sheet 12 away from the unidirectional conductive device 11 are exposed outside, other conductive parts are sealed and insulated.

Further, as shown in FIGS. 3 to 5, in an embodiment, a plurality of unidirectional conductive devices 11 are provided. The plurality of unidirectional conductive devices 11 are connected in series. A unidirectional conductive device 11 at a head end of the plurality of unidirectional conductive devices 11 is electrically connected with the first conducting wire 15, and a unidirectional conductive device 11 at a tail end of the plurality of unidirectional conductive devices 11 is electrically connected with the second conducting wire 16.

Each electrical connection point at which one unidirectional conductive device 11 is connected to another unidirectional conductive device 11 in series is provided with a conductive sheet 12. The conductive end 111 of the unidirectional conductive device 11 at the head end, which is not electrically connected with an adjacent unidirectional conductive device 11, is electrically connected to the first conducting wire 15. The conductive end 111 of the unidirectional conductive device 11 at the tail end, which is not electrically connected with an adjacent unidirectional conductive device 11, is electrically connected to the second conducting wire 16.

Further, as shown in FIG. 1, in an embodiment, the unidirectional conductive device 11 is located entirely within the insulating package body 14.

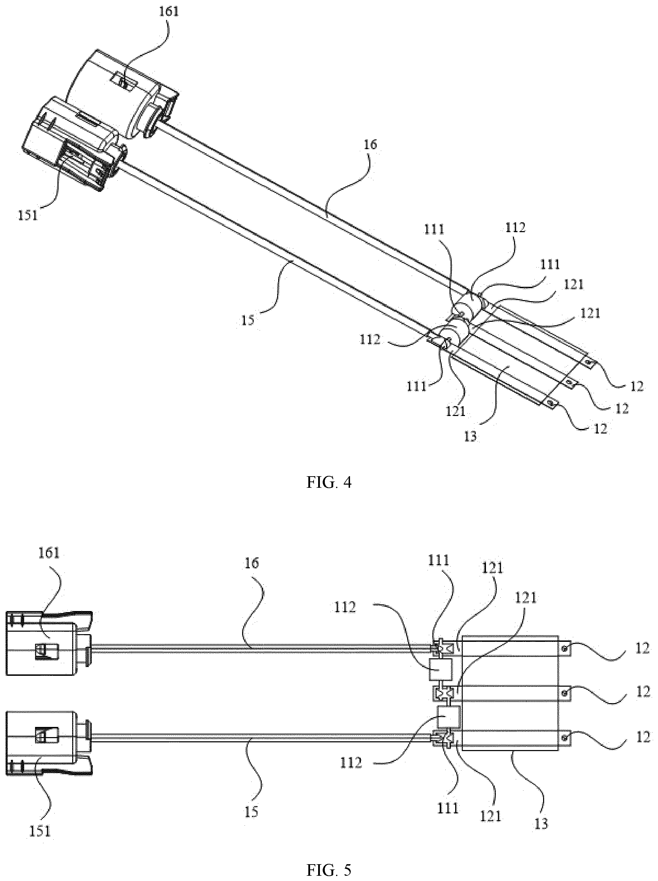

Optionally, in another embodiment, as shown in FIGS. 3 and 4, a portion of the unidirectional conductive device 11 between the two conductive ends 111 of the unidirectional conductive device 11 is a unidirectional conductive body 112. The unidirectional conductive body 112 is at least partially exposed outside the insulating package body 14. Therefore, when the unidirectional conductive joint assembly 10 works, a heat generated by the unidirectional conductive device 11 can be rapidly diffused outwardly, and the service life of the unidirectional conductive device 11 is prolonged.

In an embodiment, the unidirectional conductive device 11 is a diode. The unidirectional conductive body 112 is a portion of the diode between its two conductive ends 111.

Further, as shown in FIG. 1, in an embodiment, the unidirectional conductive device 11 is located entirely within the insulating package body 14. A heat dissipation filler is further arranged in the insulating package body 14. The heat dissipation filler is distributed between the unidirectional conductive device 11 and the insulating package body 14. The insulating package body 14 is integrally molded outside the unidirectional conductive device 11 and the heat dissipation filler.

By distributing the heat dissipation filler around the unidirectional conductive device 11, the heat generated by the unidirectional conductive device 11 can be quickly transferred to the outside, thereby improving the heat dissipation effect. The heat dissipation filler can be a heat dissipation silicone. It can not only achieve the effect of heat dissipation, but also achieve the effect of insulation and sealing.

Further, in an embodiment, the conductive sheet 12 is a copper sheet. A thickness of the conductive sheet is in a range from about 0.05 mm to about 0.2 mm. In an embodiment, a thickness of the conductive sheet 12 is about 0.1 mm. In another embodiment, a thickness of the conductive sheet 12 is about 0.05 mm. In yet another embodiment, a thickness of the conductive sheet 12 is about 0.2 mm.

Further, in an embodiment, the conductive sheet 12 is connected to the conductive end 111 of the unidirectional conductive device 11 by soldering. Preferably, the conductive sheet 12 is connected to the conductive end 111 of the unidirectional conductive device 11 by lead-free soldering.

Further, in an embodiment, the insulating film 13 is a polyimide film (PI film). A thickness of the insulating film 13 is in a range from about 0.02 mm to about 0.1 mm. A thickness of the insulating film 13 is about 0.05 mm. In another embodiment, a thickness of the insulating film 13 is about 0.02 mm. In yet another embodiment, a thickness of the insulating film 13 is about 0.1 mm.

It should be noted that in some embodiments, the insulating film 13 is semitransparent. As shown in FIGS. 3 to 5, the conductive sheet 12 can be seen through the insulating film 13. In some other embodiments, the insulating film 13 is non-transparent. As shown in FIGS. 1 and 2, a portion of the conductive sheet 12 between the two insulating films 13 is shielded.

Further, as shown in FIGS. 1 to 5, the conductive sheets 12 are laminated and pressed between the same pair of insulating films 13. The conductive sheets 12 are arranged at intervals in a first direction. In the first direction, a sum of a distance between two conductive sheets 12 located at the outermost sides and widths of these two conductive sheets 12 is H. In the first direction, a width of the insulating films 13 is not less than H.

Optionally, the insulating films 13 can be designed as strip films having a width slightly greater than that of the conductive sheet 12, and conductive sheets 12 are pressed between different pairs of insulating films 13 respectively.

Further, in an embodiment, the insulating package body 14 is made of a high-temperature silicone.

The insulating package body 14 is made of polyamide 6 (PA6, nylon 6), polyadiohexylenediamine (PA66), or polypropylene (PP).

Further, in another embodiment, a photovoltaic sunroof mechanism 20 is provided. The photovoltaic sunroof mechanism 20 includes a photovoltaic glass 21 and the unidirectional conductive joint assembly 10 as described above. The portion of the conductive sheet 12 extending out of the insulating package body 14 is electrically connected with a busbar of the photovoltaic glass 21.

The photovoltaic sunroof mechanism 20 according to the above embodiment, effectively avoids hot spots during use by adopting the unidirectional conductive joint assembly 10 described in any of the above embodiments. In addition, since the two conductive ends 111 of the unidirectional conductive device 11, the first conductive part 121, and the film edges of the insulating films 13 adjacent to the first conductive part 121 are all sealed in the insulating package body 14, the electrical safety in use can be effectively improved.

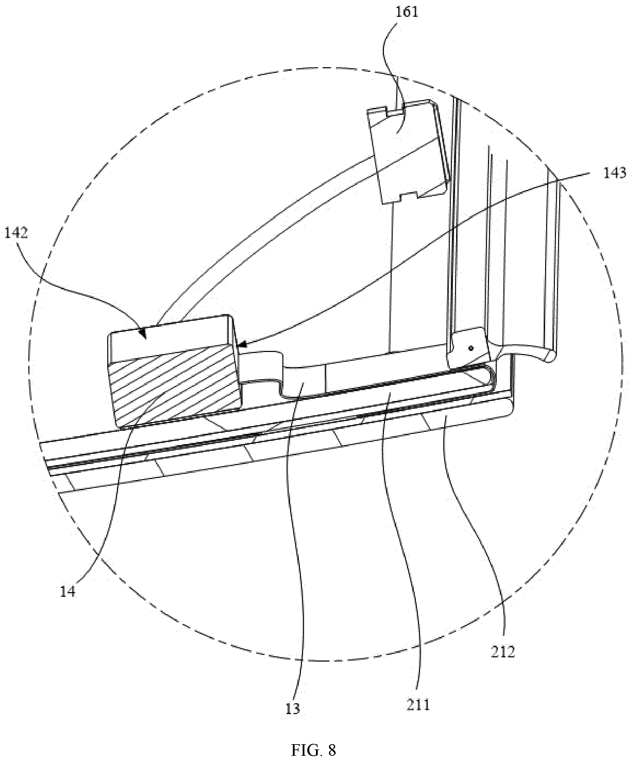

Further, as shown in FIG. 8, in an embodiment, the photovoltaic glass 21 includes an inner glass 211 and an outer glass 212 that are laminated to each other. A solar cell is laminated between the inner glass 211 and the outer glass 212. The insulating package body 14 of the unidirectional conductive joint assembly 10 is located on a side of the inner glass 211 facing away from the outer glass 212. The conductive sheet 12 and the insulating films 13 are bent at this side of the inner glass 211, then, inserted between the inner glass 211 and the outer glass 212, and electrically connected with the busbar of the solar cell. Since both the insulating films 13 and the conductive sheet 12 are in a form of a thin sheet, the easier bending arrangement is allowed. Moreover, the insulating films 13 insulates and packages the conductive sheet 12 therebetween, so that the insulating performance can be better ensured even if the wiring distance is long, and the use is convenient.

In the description of the present application, it is to be understood that orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientations or positional relationships shown in the drawings. These terms are only intended for facilitating illustrating the present application and simplifying the illustration, rather than indicating or implying that the devices or elements referred thereto have to present particular orientations, and be constructed and operated in particular orientations, and therefore cannot be construed as limiting the present application.

In addition, the terms "first" and "second" are only intended for illustrative purposes, rather than being construed as indicating or implying relative importance or implicitly designating the number of the technical features as indicated. Thus, the features defined by "first" and "second" may explicitly or implicitly include at least one of the features. In the illustrations of the present application, the term "a plurality of" means at least two, for example two or three, unless otherwise explicitly and specifically defined.

In the present application, unless otherwise expressly specified and defined, the terms "mounted", "connected to", "coupled" and "fixed" should be understood in a broad sense, for example, fixedly connected or removably connected, or integrated; mechanically connected or electrically connected; directly connected or indirectly connected through an intermediate medium, or in an interior communication or mutual interaction relationship between two elements, unless otherwise specifically defined. For those of ordinary skill in the art, the specific meanings of the above-described terms in the present application may be understood according to specific circumstances.

In the present application, unless otherwise expressly stated and defined, a first feature, when being referred to as being located "above" or "below" a second feature, may be in direct contact with the second feature, or in indirect contact with the second feature via an intermediate feature. Moreover, a first feature, when being referred to as being disposed "on", "above" and "over" a second feature, may be disposed right above or obliquely above the second feature, or simply disposed at a level higher than the second feature. A first feature, when being referred to as being disposed "under", "below" and "beneath" a second feature, may be disposed directly below or obliquely below the second feature, or simply disposed at a level lower than the second feature.

It should be noted that, when an element is referred to as being "fixed to" or "disposed on" another element, it may be directly on the other element or an intermediate element may also be present. When an element is referred to as being "connected" to another element, it may be directly connected to the other element or an intermediate element might be present at the same time. The terms "vertical", "horizontal", "up", "down", "left", "right" and similar expressions used herein are only for the purpose of illustration, rather than presenting the only ways for implementation.

The technical features of the embodiments above may be combined arbitrarily. To make the description concise, not all possible combinations of the technical features in the above embodiments are described. However, as long as there are no contradictions in the combinations of these technical features, all the combinations should be considered to be within the scope of the specification.

The embodiments above only represent several implementation modes of the present application, and the description thereof is relatively specific and detailed, but it should not be construed as limiting the scope of the patent. It should be noted that for those skilled in the art, various modifications and improvements may be made without departing from the concept of the present application, and all these modifications and improvements falls within the protection scope of the present application. Therefore, the scope of protection of the patent application should be subject to the appended claims.

## Claims

1. A unidirectional conductive joint assembly, comprising:

   a unidirectional conductive device, one conductive end of the unidirectional conductive device being electrically connected with a conductive sheet, another conductive end of the unidirectional conductive device being electrically connected with another conductive sheet, insulating films being laminated on two sides of each of the conductive sheets, and each of the conductive sheets being sandwiched between two insulating films; and
   an insulating package body, two conductive ends of the unidirectional conductive device being sealed in the insulating package body in an insulating manner, a portion of each of the conductive sheets located on a side of the insulating films adjacent to the unidirectional conductive device being a first conductive part, the first conductive part and film edges of the insulating films adjacent to the first conductive part being in the insulating package body in an insulating manner, and wherein the conductive sheet and the insulating films are partially located outside the insulating package body.

2. The unidirectional conductive joint assembly according to claim 1, wherein a clamping assembly is disposed on the insulating package body; the clamping assembly comprises two clamping bosses arranged opposite to each other; the two clamping bosses comprised in the clamping assembly respectively clamp the two sides of the conductive sheet; one of the insulating films is located between the conductive sheet and one of the clamping bosses, and another one of the insulating films is located between the conductive sheet and another one of the clamping bosses.

3. The unidirectional conductive joint assembly according to claim 2, wherein an end surface of each of the clamping bosses away from the insulating package body is a curved surface in a direction in which the insulating films extend out of the insulating package body.

4. The unidirectional conductive joint assembly according to claim 3, wherein the clamping bosses are semicircular clamping flaps; an edge with a diameter of each of the clamping flaps is connected to the insulating package body; and the curved surface and the edge with the diameter enclose a semicircular shape.

5. The unidirectional conductive joint assembly according to claim 2, wherein a thickness of each of the clamping bosses gradually decreases in a direction in which the insulating films extend out of the insulating package body.

6. The unidirectional conductive joint assembly according to claim 1, wherein a bottom surface or a top surface of the insulating package body is configured to be attached to a photovoltaic glass; a surface of the insulating package body between the top surface and the bottom surface is a side surface; and the insulating films and the conductive sheet extend out of the insulating package body through the side surface of the insulating package body.

7. The unidirectional conductive joint assembly according to claim 1, further comprising a first conducting wire and a second conducting wire, wherein an end of the first conducting wire is electrically connected with the one conductive end of the unidirectional conductive device, another end of the first conducting wire is provided with a first plug; an end of the second conducting wire is electrically connected with the other conductive end of the unidirectional conductive device, another end of the second conducting wire is provided with a second plug; a sealing boss is disposed on a portion of the insulating package body through which the first conducting wire and/or the second conducting wire extends; and the sealing boss seals an outer periphery of the first conducting wire and/or the second conducting wire.

8. The unidirectional conductive joint assembly according to claim 7, wherein a plurality of the unidirectional conductive devices are provided; the plurality of the unidirectional conductive devices are connected in series; a unidirectional conductive device at a head end of the plurality of the unidirectional conductive devices is electrically connected with the first conducting wire; and a unidirectional conductive device at a tail end of the plurality of the unidirectional conductive devices is electrically connected with the second conducting wire.

9. The unidirectional conductive joint assembly according to claim 1, wherein the unidirectional conductive device is located entirely within the insulating package body; a heat dissipation filler is arranged in the insulating package body; the heat dissipation filler is distributed between the unidirectional conductive device and the insulating package body; and the insulating package body is integrally molded outside the unidirectional conductive device and the heat dissipation filler.

10. The unidirectional conductive joint assembly according to claim 1, wherein a portion of the unidirectional conductive device between the two conductive ends of the unidirectional conductive device is a unidirectional conductive body; and the unidirectional conductive body is at least partially exposed outside the insulating package body.

11. The unidirectional conductive joint assembly according to any one of claims 1 to 10, wherein the conductive sheet is a copper sheet, and a thickness of the conductive sheet is in a range from about 0.05 mm to about 0.2 mm.

12. The unidirectional conductive joint assembly according to any one of claims 1 to 10, wherein the conductive sheet is connected to respective one of the conductive ends of the unidirectional conductive device by soldering.

13. The unidirectional conductive joint assembly according to any one of claims 1 to 10, wherein the insulating films are PI films, and a thickness of each of the insulating films is in a range from about 0.02 mm to about 0.1 mm.

14. The unidirectional conductive joint assembly according to any one of claims 1 to 10, wherein the insulating package body is made of a high-temperature silicone.

15. A photovoltaic sunroof mechanism, comprising:

a photovoltaic glass; and
the unidirectional conductive joint assembly according to any one of claims 1 to 14,
wherein a portion of the conductive sheet extending out of the insulating package body is electrically connected with a busbar of the photovoltaic glass.

FIG. 1

FIG. 2

FIG. 3

FIG. 4

FIG. 5

FIG. 6

FIG. 7

FIG. 8

## INTERNATIONAL SEARCH REPORT

International application No.

**PCT/CN2022/120103**

| A. | CLASSIFICATION OF SUBJECT MATTER |
|---|---|

H02S 40/34(2014.01)i; H02S 20/00(2014.01)i; B60J 7/00(2006.01)i

According to International Patent Classification (IPC) or to both national classification and IPC

| B. | FIELDS SEARCHED |
|---|---|

Minimum documentation searched (classification system followed by classification symbols)

H02S;B60J

Documentation searched other than minimum documentation to the extent that such documents are included in the fields searched

Electronic data base consulted during the international search (name of data base and, where practicable, search terms used)

CNPAT, CNKI, WPI, EPODOC: 福耀玻璃工业集团股份有限公司, 张建明, 关金亮, 陈敏, 郭勇, 刘春炘, 二极管, 光伏, 太阳能, 导电片, 接线盒, 出线盒, 盒, 接触片, 绝缘膜, 天窗, 密封, 凸台, 铜片, 封装体, diode, photovoltaic, conduct+, box, contact, insulating film, seal, sunroof, package

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 113922755 A (FUYAO GLASS INDUSTRY GROUP CO., LTD.) 11 January 2022 (2022-01-11) claims 1-10, description, paragraphs 0035-0077, and figures 1-8 | 1-15 |
| X | JP 2012182365 A (KITANI DENKI K.K.) 20 September 2012 (2012-09-20) description, paragraphs 0002-0025, and figures 1-9 | 1-2, 5-6, 9-15 |
| Y | JP 2012182365 A (KITANI DENKI K.K.) 20 September 2012 (2012-09-20) description, paragraphs 0002-0025, and figures 1-9 | 3-4, 7-8 |
| Y | TW M403754 U (TAPOLLOP TECHNOLOGY CO., LTD.) 11 May 2011 (2011-05-11) description, pages 3-10, and figures 1-7 | 3-4 |
| Y | CN 202487611 U (WUXI GUOSHENG PRECISION TOOL CO., LTD.) 10 October 2012 (2012-10-10) description, paragraphs 0002-0020, and figures 1-5 | 7-8 |
| A | CN 102779872 A (JIANGYIN EVERISE AUTOMOBILE PARTS MFG CO., LTD.) 14 November 2012 (2012-11-14) entire document | 1-15 |

☑ Further documents are listed in the continuation of Box C.  ☑ See patent family annex.

| * | Special categories of cited documents: |  |  |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means |  |  |
| "P" | document published prior to the international filing date but later than the priority date claimed | "&" | document member of the same patent family |

| Date of the actual completion of the international search | Date of mailing of the international search report |
|---|---|
| **07 December 2022** | **15 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** |  |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/120103**

**C.    DOCUMENTS CONSIDERED TO BE RELEVANT**

| Category* | Citation of document, with indication, where appropriate, of the relevant passages | Relevant to claim No. |
|---|---|---|
| A | CN 211296677 U (SUZHOU CSI SOLAR POWER TECHNOLOGY CO., LTD. et al.) 18 August 2020 (2020-08-18)<br>entire document | 1-15 |
| A | CN 109067355 A (JIANGSU TIANSHENG PHOTOVOLTAIC TECHNOLOGY CO., LTD.) 21 December 2018 (2018-12-21)<br>entire document | 1-15 |
| A | CN 102394252 A (RENHE PHOTOVOLTAIC TECHNOLOGY CO., LTD.) 28 March 2012 (2012-03-28)<br>entire document | 1-15 |
| A | US 9412890 B1 (BEIJING APOLLO DING RONG SOLAR TECHNOLOGY CO., LTD.) 09 August 2016 (2016-08-09)<br>entire document | 1-15 |

Form PCT/ISA/210 (second sheet) (January 2015)

**INTERNATIONAL SEARCH REPORT**
Information on patent family members

International application No.

**PCT/CN2022/120103**

| Patent document cited in search report | | | Publication date (day/month/year) | Patent family member(s) | | | Publication date (day/month/year) |
|---|---|---|---|---|---|---|---|
| CN | 113922755 | A | 11 January 2022 | None | | | |
| JP | 2012182365 | A | 20 September 2012 | JP | 689710 | B2 | 25 March 2015 |
| TW | M403754 | U | 11 May 2011 | None | | | |
| CN | 202487611 | U | 10 October 2012 | None | | | |
| CN | 102779872 | A | 14 November 2012 | CN | 102779872 | B | 10 December 2014 |
| CN | 211296677 | U | 18 August 2020 | None | | | |
| CN | 109067355 | A | 21 December 2018 | CN | 208768033 | U | 19 April 2019 |
| CN | 102394252 | A | 28 March 2012 | None | | | |
| US | 9412890 | B1 | 09 August 2016 | None | | | |

Form PCT/ISA/210 (patent family annex) (January 2015)

**REFERENCES CITED IN THE DESCRIPTION**

**Patent documents cited in the description**

• CN 2021111067467